# EUROPEAN PATENT APPLICATION

(11) **EP 4 496 339 A1**
(43) Date of publication of application: **22.01.2025**
(21) Application number: 23773741.6
(22) Date of filing: 17.03.2023
(51) Int. Cl.: H04Q 11/00

(54) **INFORMATION CONFIGURATION METHOD AND APPARATUS, STORAGE MEDIUM, AND PROGRAM PRODUCT**

(30) Priority: 24.03.2022 CN 202210296784
(71) Applicant: ZTE Corporation, Shenzhen, Guangdong 518057 (CN)
(72) Inventor: ZHANG, Weiliang, Shenzhen, Guangdong 518057 (CN); HUANG, Xingang, Shenzhen, Guangdong 518057 (CN); TAO, Kai, Shenzhen, Guangdong 518057 (CN); YUAN, Liquan, Shenzhen, Guangdong 518057 (CN); JIANG, Yi, Shenzhen, Guangdong 518057 (CN)
(74) Representative: Savi, Massimiliano
(86) International application number: PCT/CN2023/082232
(87) International publication number: WO 2023/179493

(57) **Abstract**

Disclosed in the present application are an information configuration method and apparatus, a storage medium, and a program product. The information configuration method comprises: determining target error correction code information according to a candidate error correction code type which is supported by an optical line terminal; and sending the target error correction code information to an optical network unit, such that by using the target error correction code information, the optical network unit performs error correction code encoding on communication data which is sent to the optical line terminal.

## Description

### CROSS-REFERENCE TO RELATED APPLICATION

This application is based on and claims the priority of Chinese patent application No. 202210296784.1 filed on March 24, 2022, the disclosure of which is incorporated herein by reference in its entirety.

### TECHNICAL FIELD

The present disclosure relates to the field of communications technologies, in particular to an information configuration method and apparatus, a storage medium, and a program product.

### BACKGROUND

In current passive optical networks (PONs), low-density parity-check (LDPC) codes are used as forward error correction (FEC), that is, the FEC is obtained from an IEEE mother code by deleting the last one and a half columns of the LDPC code.

In a related technology, due to different characteristics of various optical distribution networks (ODNs) and different FEC decoding schemes supported by different optical line terminals (OLTs), different optical network units (ONUs) need to use different FEC codes to adapt to performance of different ONUs. However, there is currently no relevant solution that can enable different ONUs to adaptively use different FEC codes.

### SUMMARY

The following is a summary of the subject matters described in detail herein. This summary is not intended to limit the scope of protection of the claims.

An embodiment of the present disclosure provides an information configuration method and apparatus, a storage medium, and a program product to enable an ONU to adaptively use a corresponding FEC code type.

In accordance with one aspect, an embodiment of the present disclosure provides an information configuration method, applied to an OLT, the information configuration method including: determining target error correction code (ECC) information according to a candidate ECC type supported by the OLT; and sending the target ECC information to an ONU, such that by using the target ECC information, the ONU performs ECC encoding on communication data sent to the OLT.

In accordance with another aspect of the present disclosure, an embodiment further provides an information configuration method, applied to an ONU, the information configuration method including: sending operation parameter information to an OLT; receiving target ECC information sent by the OLT, where the target ECC information is determined by the OLT according to the operation parameter information and a candidate ECC type supported by the OLT; and performing, by using the target ECC information, ECC encoding on communication data sent to the OLT.

In accordance with another aspect of the present disclosure, an embodiment further provides an information configuration apparatus, including: a memory, a processor, and a computer program stored in the memory and executable by the processor, where the computer program, when executed by the processor, causes the processor to implement the information configuration method described above.

In accordance with another aspect of the present disclosure, an embodiment further provides a computer-readable storage medium storing computer-executable instructions for performing the information configuration method described above.

In accordance with another aspect of the present disclosure, an embodiment further provides a computer program product, including a computer program or computer instructions stored in a computer-readable storage medium, from which a processor of a computer device reads the computer program or the computer instructions, where the computer program or the computer instructions, when executed by the processor, cause the computer device to perform the information configuration method described above.

In the embodiments of the present disclosure, target ECC information is first determined according to a candidate ECC type supported by an OLT, and then the target ECC information is sent to an ONU, such that by using the target ECC information, the ONU performs ECC encoding on communication data sent to the OLT. The target ECC information is selected by the OLT according to an actual network condition, for example, target ECC information matching the ONU can be selected. Therefore, when the ONU uses the target ECC information to perform ECC encoding on the communication data sent to the OLT, the ONU adaptively uses a corresponding ECC for encoding. This fills the technical gap in an existing method.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims and the accompanying drawings.

### BRIEF DESCRIPTION OF DRAWINGS

The accompanying drawings are used to provide further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
FIG. 1 is a flowchart of an information configuration method according to Embodiment I of the present disclosure;
FIG. 2 is a flowchart of an information configuration method according to Embodiment II of the present disclosure;
FIG. 3 is a flowchart of an information configuration method according to Embodiment III of the present disclosure;
FIG. 4 is a flowchart of an information configuration method according to Embodiment IV of the present disclosure;
FIG. 5 is a flowchart of an information configuration method according to Embodiment V of the present disclosure;
FIG. 6 is a flowchart of an information configuration method according to Embodiment VI of the present disclosure;
FIG. 7 is a flowchart of an information configuration method according to Embodiment VII of the present disclosure;
FIG. 8 is a schematic diagram of a bandwidth allocation map (BWmap) with code type indication information according to an embodiment of the present disclosure;
FIG. 9 is a flowchart of an information configuration method according to Embodiment VIII of the present disclosure;
FIG. 10 is a flowchart of an information configuration method according to Embodiment IX of the present disclosure;
FIG. 11 is a flowchart of an information configuration method according to Embodiment X of the present disclosure;
FIG. 12 is a flowchart of an information configuration method according to Embodiment XI of the present disclosure;
FIG. 13 is a flowchart of an information configuration method according to Embodiment XII of the present disclosure;
FIG. 14 is a flowchart of an information configuration method according to Embodiment XIII of the present disclosure;
FIG. 15 is a flowchart of an information configuration method according to Embodiment XIV of the present disclosure;
FIG. 16 is a flowchart of an information configuration method according to Embodiment XV of the present disclosure; and
FIG. 17 is a flowchart of an information configuration method according to Embodiment XVI of the present disclosure.

### DETAILED DESCRIPTION

In order to make the objectives, technical schemes and advantages of the present disclosure more apparent, the present disclosure is further described in detail with reference to the accompanying drawings and embodiments. It should be understood that the particular embodiments described herein are only intended to explain the present disclosure and are not intended to limit the present disclosure.

It is to be noted that although a logical order is shown in the flowcharts, the steps shown or described may be performed, in some cases, in a different order from the order shown or described in the flowcharts. The terms such as "first" and "second" in the description, claims and above-mentioned drawings are intended to distinguish between similar objects and are not necessarily to describe a specific order or sequence.

The present disclosure provides an information configuration method, an information configuration apparatus, a computer-readable storage medium, and a computer program product. The information configuration method of an embodiment includes: determining target ECC information according to a candidate ECC type supported by an OLT; and sending the target ECC information to an ONU, such that by using the target ECC information, the ONU performs ECC encoding on communication data sent to the OLT. In this embodiment, the target ECC information is first determined according to the candidate ECC type supported by the OLT, and then the target ECC information is sent to the ONU, such that by using the target ECC information, the ONU performs ECC encoding on the communication data sent to the OLT. The target ECC information is selected by the OLT according to an actual network condition, for example, target ECC information matching the ONU can be selected. Therefore, when the ONU uses the target ECC information to perform ECC encoding on the communication data sent to the OLT, the ONU adaptively uses a corresponding ECC for encoding. This fills the technical gap in an existing method.

The embodiments of the present disclosure will be further explained below with reference to the accompanying drawings.

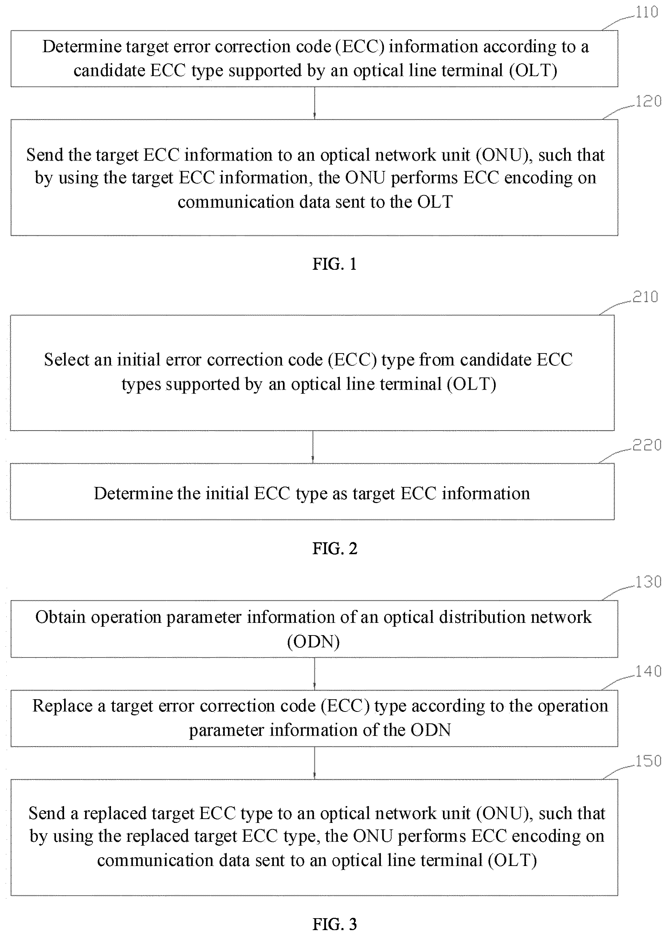

FIG. 1 is a flowchart of an information configuration method according to an embodiment of the present disclosure. The information configuration method is applied to an OLT.

In the example shown in FIG. 1, the information configuration method includes, but is not limited to, steps S110 and S120.

At S110, target ECC information is determined according to a candidate ECC type supported by the OLT.

It can be understood that different OLTs support different FEC decoding schemes and support different quantities of FEC decoding schemes. Different ONUs need to use different FEC code types to adapt to performance of different ONUs.

It should be noted that there may be one or more pieces of target ECC information. In the case of a plurality of pieces of target ECC information, the ONU can subsequently perform selection or replacement.

At S120, the target ECC information is sent to the ONU, such that by using the target ECC information, the ONU performs ECC encoding on communication data sent to the OLT.

Referring to FIG. 2, in a possible implementation, in an initial online phase of the ONU, step S110 is further explained. Step S110 may include but is not limited to steps S210 and S220.

At S210, an initial ECC type is selected from candidate ECC types supported by the OLT.

Generally, in the initial online phase of the ONU, from the candidate ECC types supported by the OLT, one with the strongest error correction ability is selected as the initial ECC type, or one suitable for error correction by the OLT is selected as the initial ECC type.

At S220, the initial ECC type is determined as the target ECC information.

In a possible implementation, the target ECC information includes a target ECC type. Referring to FIG. 3, FIG. 3 is a further supplement to the information configuration method on the basis of FIG. 1, and the information configuration method further includes steps S130, S140, and S150.

At S130, operation parameter information of an ODN is obtained.

At S140, the target ECC type is replaced according to the operation parameter information of the ODN.

At S150, a replaced target ECC type is sent to the ONU, such that by using the replaced target ECC type, the ONU performs ECC encoding on communication data sent to the OLT.

It can be understood that the ODN sends the collected operation parameter information to the OLT, such that the OLT can replace the target ECC type according to a current communication condition so that the ONU uses a more suitable target ECC type to perform ECC encoding.

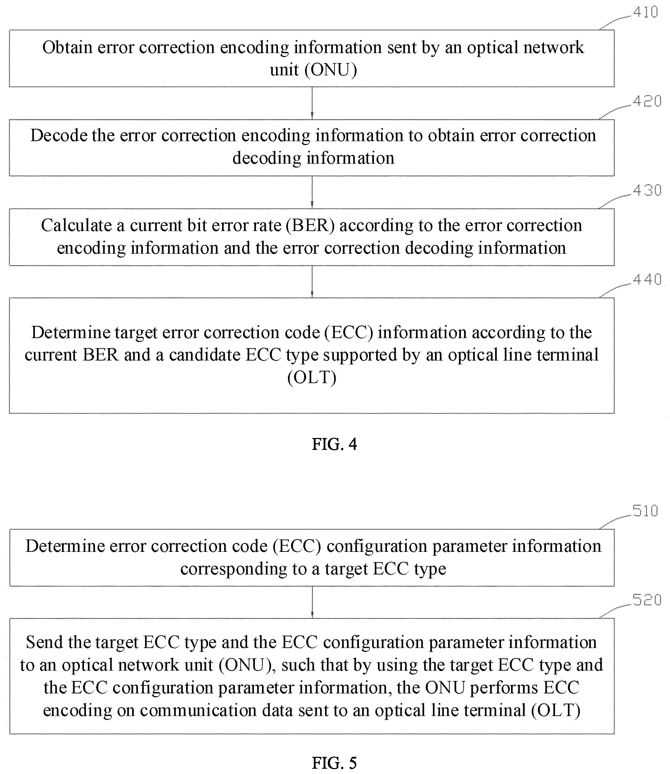

Referring to FIG. 4, in a possible implementation, step S110 is further explained. Step S110 may include but is not limited to steps S410 to S440.

At S410, error correction encoding information sent by the ONU is obtained.

At S420, the error correction encoding information is decoded to obtain error correction decoding information.

At S430, a current bit error rate (BER) is calculated according to the error correction encoding information and the error correction decoding information.

At S440, the target ECC information is determined according to the current BER and the candidate ECC type supported by the OLT.

It can be understood that, when the ONU is initially online, a high Margin parameter can be used for registration. In this case, a FEC code has a strong error correction ability. If a decoding flag of the FEC code indicates successful decoding after registration, the error correction encoding information sent by the ONU is obtained. The error correction encoding information is decoded to obtain the error correction decoding information. Then, the current BER is calculated according to the error correction encoding information and the error correction decoding information. Finally, according to the current BER, the target ECC information matching the current BER is determined from candidate ECC types supported by the OLT.

It can be understood that, when the ONU is initially online, a candidate ECC type suitable for error correction by the OLT can also be selected as the initial ECC type, for example, another FEC code with an error correction ability can be used, provided that the OLT can perform error correction.

Additionally, it is to be noted that, in some embodiments, before the sending the target ECC information to an ONU, the information configuration method further includes: sharing the candidate ECC type with the ONU.

The OLT first shares the supported candidate ECC type with the ONU, such that after the OLT sends the target ECC information to the ONU, the ONU can normally use the target ECC information to perform ECC encoding, so as to avoid a case that the target ECC information sent by the OLT cannot be used by the ONU.

In a possible implementation, the OLT shares the supported candidate ECC type with the ONU in the following manner:
sending burst profile control information including the candidate ECC type to the ONU, such that the ONU stores the candidate ECC type in the burst profile control information.

The OLT stores the candidate ECC type in the burst profile control information, and then sends the burst profile control information to the ONU. After receiving the burst profile control information carrying the candidate ECC type, the ONU stores the candidate ECC type to realize sharing of the supported candidate ECC type between the OLT and the ONU.

It can be understood that the OLT may also share the supported candidate ECC type with the ONU in other manners, for example, the OLT agrees with the ONU on storing the candidate ECC type in common.

In a possible implementation, the target ECC information includes code type indication information for indicating a target ECC type to be used. The sending the target ECC information to an ONU, such that by using the target ECC information, the ONU performs ECC encoding on communication data sent to the OLT in S120 includes:
sending a bandwidth allocation map including the code type indication information to the ONU, such that the ONU obtains the target ECC information according to the code type indication information, and performs, according to the target ECC information, ECC encoding on the communication data sent to the OLT.

The OLT stores the code type indication information in the bandwidth allocation map, and then sends the bandwidth allocation map to the ONU. After receiving the bandwidth allocation map carrying the code type indication information, the ONU obtains the target ECC information according to the code type indication information, to perform ECC encoding on the communication data by using the target ECC information.

In a possible implementation, the target ECC information includes a target ECC type and configuration information for information to be deleted, where the configuration information for information to be deleted is used to indicate a deletion mode of content in an ECC. The sending the target ECC information to an ONU, such that by using the target ECC information, the ONU performs ECC encoding on communication data sent to the OLT in S120 includes:
sending the target ECC type and the configuration information for information to be deleted to the ONU through ECC configuration parameter information, such that by using the target ECC information and the configuration information for information to be deleted, the ONU performs ECC encoding on the communication data sent to the OLT.

The OLT stores the target ECC type and the configuration information for information to be deleted in the ECC configuration parameter information, and then sends the ECC configuration parameter information to the ONU. After receiving the ECC configuration parameter information, the ONU performs ECC encoding on the communication data by using the target ECC information and the configuration information for information to be deleted.

In some possible embodiments, the OLT sends the target ECC type and the configuration information for information to be deleted to the ONU through the ECC configuration parameter information until a count of transmissions reaches a first preset number of times, such that the ONU stores the target ECC type and the configuration information for information to be deleted; and sends the bandwidth allocation map to the ONU, such that after completing analysis of the bandwidth allocation map, the ONU performs, according to the target ECC type and the configuration information for information to be deleted, ECC encoding on the communication data sent to the OLT.

The OLT first sends the ECC configuration parameter information carrying the target ECC type and the configuration information for information to be deleted to the ONU, and the ONU receives and stores the target ECC type and the configuration information for information to be deleted. Then the OLT sends the bandwidth allocation map to the ONU as a trigger, such that after completing analysis of the bandwidth allocation map, the ONU performs, according to the stored target ECC type and the configuration information for information to be deleted, ECC encoding on the communication data sent to the OLT.

In another possible embodiment, the OLT sends the target ECC type and the configuration information for information to be deleted to the ONU through the ECC configuration parameter information, such that after receiving the ECC configuration parameter information, the ONU uses a new ECC in an uplink bandwidth according to the target ECC type and the configuration information for information to be deleted.

In some possible embodiments, the target ECC information includes a target ECC type. Referring to FIG. 5, step S120 is further explained. Step S120 may include but is not limited to steps S510 and S520.

At S 510, ECC configuration parameter information corresponding to the target ECC type is determined.

At S520, the target ECC type and the ECC configuration parameter information are sent to the ONU, such that by using the target ECC type and the ECC configuration parameter information, the ONU performs ECC encoding on the communication data sent to the OLT.

It can be understood that the target ECC information includes the target ECC type. After the ECC configuration parameter information is determined according to the target ECC type, the target ECC type and the ECC configuration parameter information are directly sent to the ONU, so that the ONU can directly use the target ECC type and the ECC configuration parameter information to perform ECC encoding.

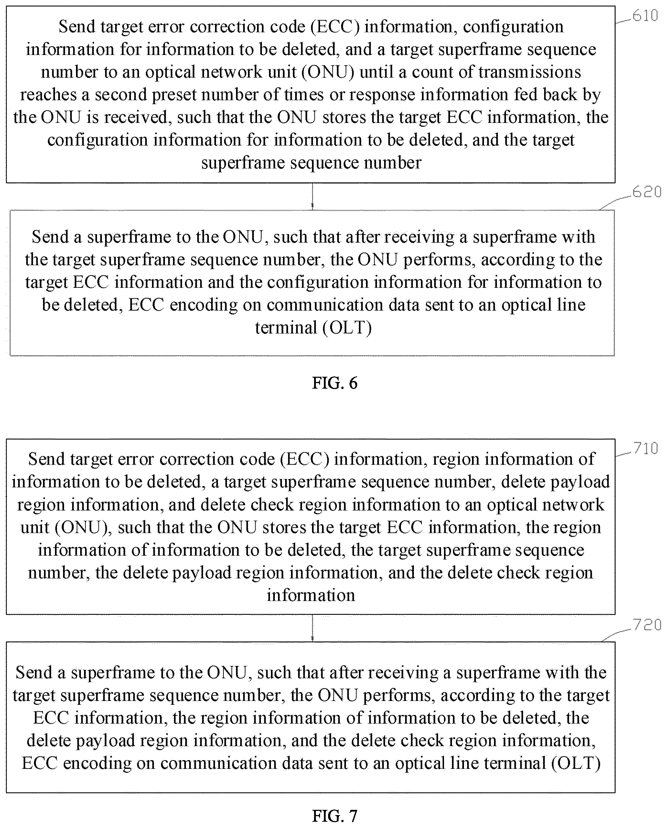

In some possible embodiments, the ECC configuration parameter information includes configuration information for information to be deleted and a target superframe sequence number, and the configuration information for information to be deleted is used to indicate a deletion mode of content in an ECC. Referring to FIG. 6, step S520 is further explained. Step S520 may include but is not limited to steps S610 and S620.

At S610, the target ECC information, the configuration information for information to be deleted, and the target superframe sequence number are sent to the ONU until a count of transmissions reaches a second preset number of times or response information fed back by the ONU is received, such that the ONU stores the target ECC information, the configuration information for information to be deleted, and the target superframe sequence number.

At S620, a superframe is sent to the ONU, such that after receiving a superframe with the target superframe sequence number, the ONU performs, according to the target ECC information and the configuration information for information to be deleted, ECC encoding on the communication data sent to the OLT.

It can be understood that, the OLT first sends the target ECC information, the configuration information for information to be deleted, and the target superframe sequence number to the ONU, and the ONU stores these pieces of information upon reception, and feeds back response information to the OLT. In response to not receiving any response information, the OLT sends the target ECC information, the configuration information for information to be deleted, and the target superframe sequence number again until the count of transmissions reaches the second preset number of times. When the target ECC information and the configuration information for information to be deleted are needed for performing ECC encoding, the OLT sends a superframe with the target superframe sequence number to the ONU, thereby triggering the ONU to use the stored target ECC information and the configuration information for information to be deleted.

In some possible embodiments, the ECC configuration parameter information includes region information of information to be deleted, a target superframe sequence number, delete payload region information, and delete check region information. Referring to FIG. 7, step S520 is further explained. Step S520 may include but is not limited to steps S710 and S720.

At S710, the target ECC information, the region information of information to be deleted, the target superframe sequence number, the delete payload region information, and the delete check region information are sent to the ONU, such that the ONU stores the target ECC information, the region information of information to be deleted, the target superframe sequence number, the delete payload region information, and the delete check region information.

At S720, a superframe is sent to the ONU, such that after receiving a superframe with the target superframe sequence number, the ONU performs, according to the target ECC information, the region information of information to be deleted, the delete payload region information, and the delete check region information, ECC encoding on the communication data sent to the OLT.

It can be understood that, the OLT first sends the target ECC information, the region information of information to be deleted, the target superframe sequence number, the delete payload region information, and the delete check region information to the ONU, and the ONU stores these pieces of information upon reception. When the target ECC information, the region information of information to be deleted, the delete payload region information, and the delete check region information are needed for performing ECC encoding, the OLT sends a superframe with the target superframe sequence number to the ONU, thereby triggering the ONU to use the stored information.

In some possible embodiments, the target ECC information includes code type indication information, and the ECC configuration parameter information includes use indication information. Step S520 is further explained. Step S520 may include the following step:
sending burst profile information including the code type indication information and the use indication information to the ONU, such that the ONU performs, according to the code type indication information and the use indication information, ECC encoding on the communication data sent to the OLT.

It can be understood that, in this embodiment, the OLT stores the code type indication information and the use indication information in the burst profile information, which are sent to the ONU together with the burst profile information.

Additionally, in some possible embodiments, the OLT may further send code type update information to the ONU, such that the ONU modifies the code type indication information according to the code type update information, and performs, according to the use indication information and modified code type indication information, ECC encoding on the communication data sent to the OLT, thereby realizing modification of the target ECC type.

The information configuration method applied to the OLT will be further explained below with reference to specific embodiments.

### Embodiment I:

Refer to Table 1 below, which presents new "Upstream FEC Code Configuration" Physical Layer Operations, Administration and Maintenance (PLOAM) information added to carry burst profile control information and configuration information for information to be deleted. Here, byte 5 carries the burst profile control information, and bytes 6 to 40 carry the configuration information for information to be deleted. Specifically, in the configuration information for information to be deleted, bytes 7 to 11 constitute a deletion configuration unit. For example, this unit indicates a basic type upon which deletion is based, whether the unit of information deletion is bit-based or column-based, whether an information deletion region is located in a payload region or a check region, a start position of deletion, a length of deletion, and the like. Byte 6 is N, indicating that N deletion configuration units are configured in the PLOAM information. Bytes 12 to 40 contain remaining (N-1) deletion configuration units, each with the same structure as the deletion configuration unit constituted by bytes 7 to 11. If there are any remaining byte in bytes 12 to 40, the remaining byte is padding.

**Table 1**

| Byte sequence number | Content | Description |
|---|---|---|
| 1-2 | ONU-ID | A targeted packet is sent to one specific ONU or a broadcast packet is sent to all ONUs. |
| | | As broadcast to all ONUs, ONU-ID = 0x03FF. |
| 3 | 0x1F | It is a type field indicating that the information is "Upstream FEC Code Configuration" type information |
| 4 | SeqNo | Unicast PLOAM sequence number |
| 5 | Burst profile control 1 | Its form is eight bytes of VWB BBPP, where: |
| | | VVV-Three bytes of burst profile version. If content of a burst profile changes, OLT CT should ensure that the version also changes so that the ONU checks for update based only on a version field. |
| | | BBB-Code point indicating applicability of a message to a particular uplink rate. The code point is specified in applicable physical medium dependent (PMD) recommendations. |
| | | PP-Two bytes of burst profile field. |
| 6 | Number of deletion | N, which represents the number of deletion configuration units constituted by bytes 7 to 11 |
| 7 | Delete content | RRRRBDDP, where: |
| | | R-Reserved |
| | | B: 0-IEEE mother code, 1-50G-PON LDPC, basic code type |
| | | DD: 00-bit, 01-byte, 10-column, 11-reserved, information deletion unit |
| | | P: 0-payload region, 1-check region, information deletion region |
| 8-9 | start position | Start position of deletion |
| 10-11 | Length | Length of deletion |
| 12-40 | ... | (N-1) deletion configuration units are included, each with the same structure as the deletion configuration unit constituted by bytes 7 to 11, and the remaining bytes are padding. |
| 41-48 | Message integrity check (MIC) | A MIC value is calculated using a default PLOAM integrity key. |

It should be noted that meanings of the remaining bytes in the PLOAM information are the same as meanings of corresponding bytes in PLOAM information in the prior art, and will not be repeated herein.

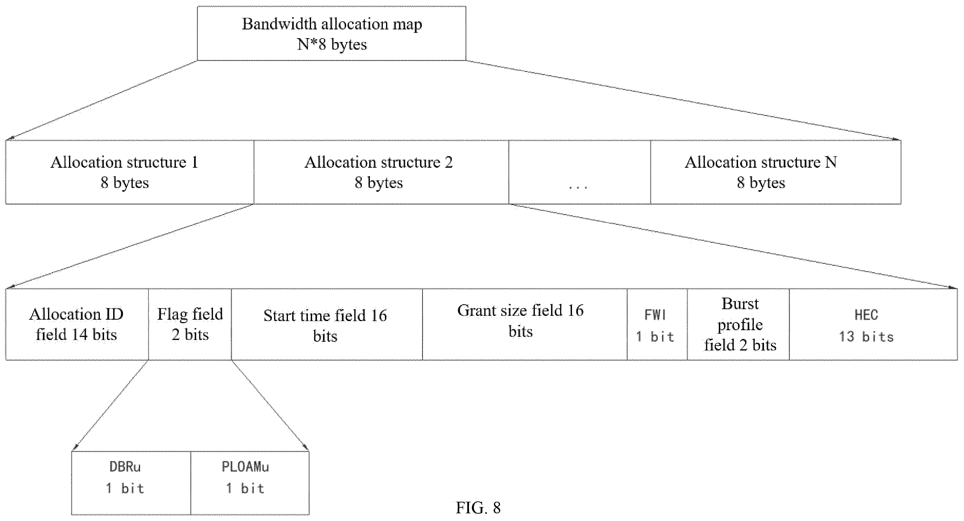

FIG. 8 is a schematic diagram of a bandwidth allocation map (BWmap) with code type indication information. The burst profile field Burst_Profile is used for extension, and the Burst profile control 1 field in Table 1 above is associated with the burst profile field Burst Profile. The burst profile control information in ECC configuration parameter information is selected through the burst profile field Burst Profile in the BWmap. In this way, an uplink FEC code type can continuously be used, or the uplink FEC code type can be switched at any time. The OLT in a deployment phase can determine and continuously use an uplink FEC code type according to a decoding method used by the OLT and evaluation of an ODN. Alternatively, the OLT in the deployment phase may first use a code type with a strong error correction ability, then evaluate, in subsequent operation, a decoding method used by the OLT and the ODN, and based on an evaluation result, replace the current code type with a more suitable uplink FEC code type, for example, a code type with a slightly weaker error correction ability but high bandwidth efficiency. Certainly, the OLT may also evaluate the decoding method and a limit error tolerance ability of the ODN, that is, the error correction ability of the uplink FEC code type is caused to gradually reduce until a FEC decoding flag indicates a failure of decoding. Subsequently, bandwidth efficiency can be adjusted according to an uplink traffic volume. For example, when the uplink traffic volume is large, an uplink FEC code type with higher bandwidth efficiency is used; when the uplink traffic volume is small, an uplink FEC code type with lower bandwidth efficiency is used.

It should be noted that the code type indication information includes at least one of the following:
bits of a burst profile field in a bandwidth allocation map;
partial bits of a start time field in the bandwidth allocation map; or
partial bits of a grant size field in the bandwidth allocation map.

In actual deployment, due to factors such as varying lengths of branched optical fibers, different optical splitters, and different surrounding environments at the OLTs, a plurality of FEC code types may be needed to ensure that each OLT operates at an optimal state in terms of error correction capability and bandwidth efficiency. When the code type indication information includes only bits of the burst profile field in the bandwidth allocation map, since the current Burst Profile has only 2 bits, the burst profile field can indicate at most 4 different FEC code types. Therefore, different FEC code types can be classified into four or less classes, and each class uses one FEC code type. In addition, bits of the code type indication information may be expanded. For example, a maximum of 2 bits of the start time field StartTime in the bandwidth allocation map and a maximum of 2 bits of the grant size field GrantSize in the bandwidth allocation map are used. The code type indication information may indicate 16 FEC code types using 4 bits, or may indicate a total of 64 FEC code types using 6 bits.

It can be understood that when a particular FEC code type needs to be updated, an ONU using this FEC code type can switch to another code type for use, and switch back after the code type is updated.

### Embodiment II:

Refer to Table 2 below, which presents new "Upstream FEC Code Configuration" PLOAM information added to carry configuration information for information to be deleted. Here, bytes 5 to 40 carry the configuration information for information to be deleted. Specifically, in the configuration information for information to be deleted, bytes 6 to 10 constitute a deletion configuration unit. For example, this unit indicates a basic type upon which deletion is based, whether the unit of information deletion is bit-based or column-based, whether an information deletion region is located in a payload region or a check region, a start position of deletion, a length of deletion, and the like. Byte 5 is N, indicating that N deletion configuration units are configured in the PLOAM information. Bytes 11 to 40 contain remaining (N-1) deletion configuration units, each with the same structure as the deletion configuration unit constituted by bytes 6 to 10. If there are any remaining byte in bytes 11 to 40, the remaining byte is padding.

**Table 2**

| Byte sequence number | Content | Description |
|---|---|---|
| 1-2 | ONU-ID | A targeted packet is sent to one specific ONU or a broadcast packet is sent to all ONUs. |
| | | As broadcast to all ONUs, ONU-ID = 0x03FF. |
| 3 | 0x1F | It is a type field indicating that the information is "Upstream FEC Code Configuration" type information |
| 4 | SeqNo | Unicast PLOAM sequence number |
| 5 | Number of deletion | N, which represents the number of deletion configuration units constituted by bytes 6 to 10 |
| 6 | Delete content | RRRRBDDP, where: |
| | | R-Reserved |
| | | B: 0-IEEE mother code, 1-50G-PON LDPC, basic code type |
| | | DD: 00-bit, 01-byte, 10-column, 11-reserved, information deletion unit |
| | | P: 0-payload region, 1-check region, information deletion region |
| 7-8 | start position | Start position of deletion |
| 9-10 | Length | Length of deletion |
| 11-40 | ... | (N-1) deletion configuration units are included, each with the same structure as the deletion configuration unit constituted by bytes 6 to 10, and the remaining bytes are padding. |
| 41-48 | MIC | A MIC value is calculated using a default PLOAM integrity key. |

It should be noted that meanings of the remaining bytes in the PLOAM information are the same as meanings of corresponding bytes in PLOAM information in the prior art, and will not be repeated herein.

In an example, a PLOAM message is sent three times before a bandwidth is allocated to a corresponding ONU, and the ONU stores an uplink FEC code type. After that, an OLT allocates a bandwidth to the ONU, and the ONU uses the stored uplink FEC code type to increase a check for an uplink burst. In another example, the PLOAM information and a bandwidth allocation map are allocated in the same downlink superframe. The OLT needs to analyze the bandwidth allocation map and the PLOAM information before sending the uplink burst. If there is an uplink FEC code type in the same downlink superframe, the FEC code type in the message is adopted. In another case, bandwidth allocation before the PLOAM information uses an old FEC code type, while bandwidth allocation after the PLOAM information uses a new FEC code type.

It can be understood that when a particular FEC code type needs to be updated, an ONU using this FEC code type can switch to another code type for use, and switch back after the code type is updated.

### Embodiment III:

Refer to Table 3 below, which presents new "Upstream FEC Code Configuration" PLOAM information added to carry configuration information for information to be deleted and a target superframe sequence number. Here, bytes 5 to 8 carry the target superframe sequence number, and bytes 9 to 40 carry the configuration information for information to be deleted. Specifically, in the configuration information for information to be deleted, bytes 10 to 14 constitute a deletion configuration unit. For example, this unit indicates a basic type upon which deletion is based, whether the unit of information deletion is bit-based or column-based, whether an information deletion region is located in a payload region or a check region, a start position of deletion, a length of deletion, and the like. Byte 9 is N, indicating that N deletion configuration units are configured in the PLOAM information. Bytes 15 to 40 contain remaining (N-1) deletion configuration units, each with the same structure as the deletion configuration unit constituted by bytes 10 to 14. If there are any remaining byte in bytes 15 to 40, the remaining byte is padding.

**Table 3**

| Byte sequence number | Content | Description |
|---|---|---|
| 1-2 | ONU-ID | A targeted packet is sent to one specific ONU or a broadcast packet is sent to all ONUs. |
| | | As broadcast to all ONUs, ONU-ID = 0x03FF. |
| 3 | 0x1F | It is a type field indicating that the information is "Upstream FEC Code Configuration" type information |
| 4 | SeqNo | Unicast PLOAM sequence number |
| 5-8 | SFC | Target superframe sequence number using a new FEC code type |
| 9 | Number of deletion | N, which represents the number of deletion configuration units constituted by bytes 10 to 14 |
| 10 | Delete content | RRRRBDDP, where: |
| | | R-Reserved |
| | | B: 0-IEEE mother code, 1-50G-PON LDPC, basic code type |
| | | DD: 00-bit, 01-byte, 10-column, 11-reserved, information deletion unit |
| | | P: 0-payload region, 1-check region, information deletion region |
| 11-12 | start position | Start position of deletion |
| 13-14 | Length | Length of deletion |
| 15-40 | ... | (N-1) deletion configuration units are included, each with the same structure as the deletion configuration unit constituted by bytes 10 to 14, and the remaining bytes are padding. |
| 41-48 | MIC | A MIC value is calculated using a default PLOAM integrity key. |

Based on Embodiment II, this embodiment adjusts the definition of the PLOAM message by adding, to the PLOAM information, the target superframe sequence number SFC (Superframe Counter), which instructs the ONU to use a new FEC code type after a superframe with the target superframe sequence number is received. Prior to this, an OLT sends a configured PLOAM message, and the ONU replies with an Acknowledage PLOAM message after receiving the configured PLOAM message. If the OLT does not receive any Acknowledage PLOAM message, the OLT continues to send the configured PLOAM message until a count of transmissions reaches a second preset number of times.

### Embodiment IV:

In an example, a FEC code type may be set through an ONU management and control interface (OMCI) manner, and commencement of effectiveness of the code type can be set to start from a specific superframe. For example, an attribute of Upstream FEC Code Configuration is defined in an OMCI management entity OLT-G, including:
first field: region information of information to be deleted, 1 byte, 0-payload region, 1-check region;
second field: target superframe sequence number, 4 bytes, sequence number of a specified superframe;
third field: delete payload region information, 4 bytes, where a delete start column is 2 bytes, and the number of delete columns is 2 bytes; and
fourth field: delete check region information, 4 bytes, where a delete start column is 2 bytes, and the number of delete columns is 2 bytes.

It can be understood that when a particular FEC code type needs to be updated, an ONU using this FEC code type can switch to another code type for use, and switch back after the code type is updated.

### Embodiment V:

Refer to Table 4 below, which defines byte 6 in bust profile information Burst_Profile.

**Table 4**

| | | |
|---|---|---|
| 6 | Burst profile control 2 | NNMM RRCF, where: |
| | | NN-The total number of PSBu segments minus 1, with a range of 0-3. |
| | | MM-Sequence numbers of consecutive PSBu segments starting from zero, with a range of 0-NN. The PSBu segments transmitted on an optical channel will be concatenated in an order provided by the field, where 0 corresponds to a PSBu segment to be transmitted first. |
| | | C-Cross channel flag for burst profile information (TWDM only); C = 0: The message applies to the channel; C = 1: If it is transmitted in a downstream wavelength channel, it can be identified using a downstream PON ID provided by bytes 35 to 38 of the message. |
| | | F-Upstream FEC indication: |
| | | F = 1: FEC enabled; F = 0: FEC disabled. |
| | | RR = 00: code0 |
| | | RR = 01: code1 |
| | | RR = 10: code2 |
| | | RR = 11: code3 |
| | | Contents of NN, C, and F are set to be valid only in the first message corresponding to the burst profile information (that is, when MM = 0). |

It can be understood that in the burst profile information Burst_Profile, except that the two bits of RR in byte 6 are redefined, RR = 00: code0, RR = 01: code1, RR = 10: code2, RR = 11: code3, meanings of other bytes of the burst profile information Burst Profile are consistent with those in other related technologies, and will not be repeated herein.

In actual deployment of this embodiment, several uplink FEC code types can be set in advance, for example, four code types are defined in advance in the standard, code0: LDPC (C0, P0), code1: LDPC (C1, P1), code2: LDPC (C2, P2), and code3: LDPC (C3, P3). If Burst Profile = 00b, code0 is used; if Burst Profile = 01b, code1 is used; if Burst Profile = 10b, code2 is used; if Burst Profile = 11b, code3 is used. Further, it can be understood that additional bits may be carried in the burst profile information Burst Profile for indicating whether the uplink FEC is enabled or disabled.

### Embodiment VI.

Refer to Table 5 below, which defines "Upstream FEC Code Configuration" PLOAM information.

**Table 5**

| Byte sequence number | Content | Description |
|---|---|---|
| 1-2 | ONU-ID | A targeted packet is sent to one specific ONU or a broadcast packet is sent to all ONUs. |
| | | As broadcast to all ONUs, ONU-ID = 0x03FF. |
| 3 | 0x1F | It is a type field indicating that the information is "Upstream FEC Code Configuration" type information |
| 4 | SeqNo | Unicast PLOAM sequence number |
| 5 | Code | RRRRRRCC |
| | | CC = 00, code0; |
| | | CC = 01, code1; |
| | | CC = 10, code2; |
| | | CC= 11, code3; |
| 6 | Number of deletion | N, which represents the number of deletion configuration units constituted by bytes 7 to 11 |
| 7 | Delete content | RRRRBDDP, where: |
| | | R-Reserved |
| | | B: 0-IEEE mother code, 1-50G-PON LDPC, basic code type |
| | | DD: 00-bit, 01-byte, 10-column, 11-reserved, information deletion unit |
| | | P: 0-payload region, 1-check region, information deletion region |
| 8-9 | start position | Start position of deletion |
| 10-11 | Length | Length of deletion |
| 12-40 | ... | (N-1) deletion configuration units are included, each with the same structure as the deletion configuration unit constituted by bytes 7 to 11, and the remaining bytes are padding. |
| 41-48 | MIC | A MIC value is calculated using a default PLOAM integrity key. |

It can be understood that Embodiment V described above defines and solidifies code0, code1, code2, and code3 in the standard. This embodiment is more flexible than Embodiment V. For example, although code0, code1, code2, and code3 are defined in the standard, they are not solidified. Subsequently, by sending the PLOAM information carrying code type update information to the ONU, the code type indication information can be modified, such that the ONU can perform, according to use indication information and modified code type indication information, ECC encoding on communication data sent to an OLT.

Based on the above-described embodiments of the information configuration method applied to the OLT, various embodiments of an information configuration method applied to an ONU of the present disclosure are presented below.

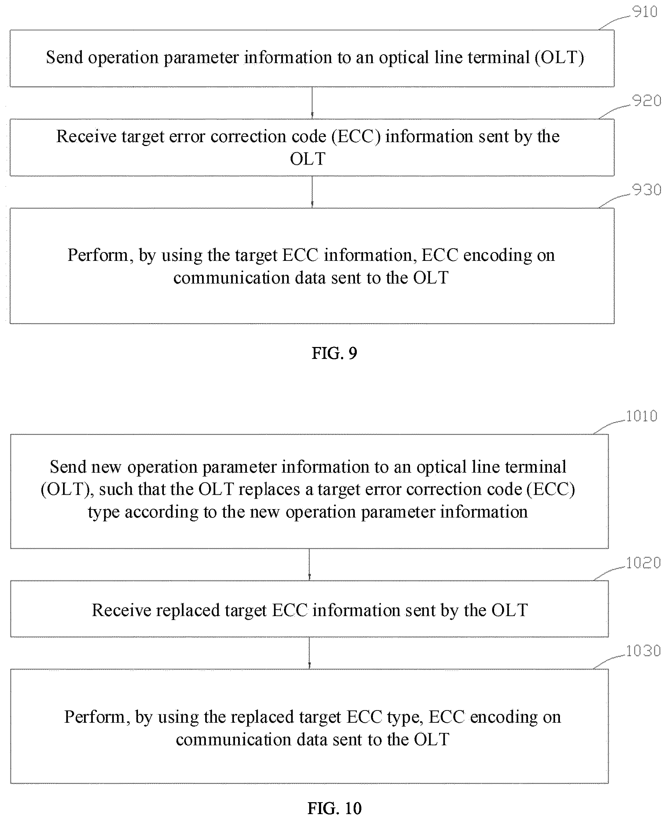

FIG. 9 is a flowchart of an information configuration method according to an embodiment of the present disclosure. The information configuration method is applied to an ONU.

In the example shown in FIG. 9, the information configuration method includes, but is not limited to, steps S910, S920, and S930.

At S910, operation parameter information is sent to an OLT.

At S920, target ECC information sent by the OLT is received, where the target ECC information is determined by the OLT according to the operation parameter information and a candidate ECC type supported by the OLT.

At S930, ECC encoding is performed, by using the target ECC information, on communication data sent to the OLT.

It can be understood that the ONU sends the operation parameter information to the OLT, such that the OLT determines the target ECC information according to the operation parameter information and the candidate ECC type supported by the OLT; and then the ONU receives the target ECC information sent by the OLT and uses the target ECC information to perform ECC encoding on the communication data sent to the OLT. In this way, the ONU adaptively uses a corresponding ECC for encoding. This fills the technical gap in an existing method.

In some possible embodiments, the target ECC information includes a target ECC type. Referring to FIG. 10, FIG. 10 is a further supplement to the information configuration method on the basis of FIG. 9, and the information configuration method further includes steps 1010, S 1020, and S 1030.

At S1010, new operation parameter information is sent to the OLT, such that the OLT replaces the target ECC type according to the new operation parameter information.

At S 1020, replaced target ECC information sent by the OLT is received.

At S 1030, ECC encoding is performed, by using the replaced target ECC type, on the communication data sent to the OLT.

It can be understood that the ONU sends the collected operation parameter information to the OLT, such that the OLT can replace the target ECC type according to a current communication condition so that the ONU uses a more suitable target ECC type to perform ECC encoding.

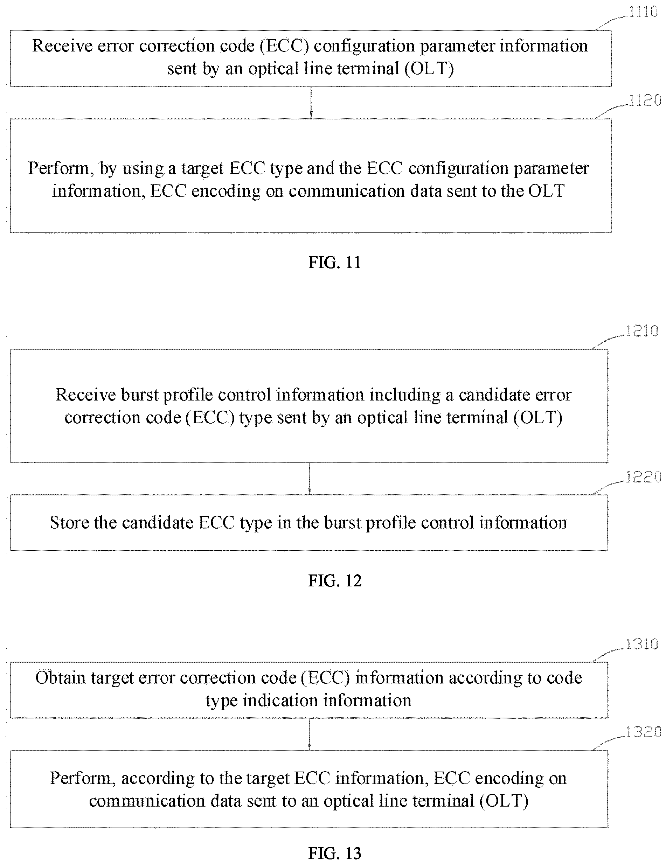

In some possible embodiments, the target ECC information includes a target ECC type. Referring to FIG. 11, step S930 is further explained. Step S930 may include but is not limited to steps S 1110 and S 1120.

At S 1110, ECC configuration parameter information sent by the OLT is received.

At S1120, ECC encoding is performed, by using the target ECC type and the ECC configuration parameter information, on the communication data sent to the OLT.

It can be understood that, the target ECC information includes a target ECC type. After further receiving the ECC configuration parameter information, the ONU can directly use the target ECC type and the ECC configuration parameter information to perform ECC encoding.

In some possible embodiments, before the receiving target ECC information sent by the OLT, the information configuration method further includes: sharing the candidate ECC type with the OLT.

The ONU first shares the candidate ECC type with the OLT, such that after the OLT sends the target ECC information to the ONU, the ONU can normally use the target ECC information to perform ECC encoding, so as to avoid a case that the target ECC information sent by the OLT cannot be used by the ONU.

Referring to FIG. 12, in some possible embodiments, the sharing the candidate ECC type with the OLT includes but is not limited to steps S1210 and S1220.

At S1210, burst profile control information including the candidate ECC type sent by the OLT is received.

At S1220, the candidate ECC type is stored in the burst profile control information.

The OLT stores the candidate ECC type in the burst profile control information, and then sends the burst profile control information to the ONU. After receiving the burst profile control information carrying the candidate ECC type, the ONU stores the candidate ECC type to realize sharing of the supported candidate ECC type between the OLT and the ONU.

It can be understood that the ONU may also share the candidate ECC type with the OLT in other manners, for example, the ONU agrees with the OLT on storing the candidate ECC type in common.

In some possible embodiments, the target ECC information includes code type indication information for indicating a target ECC type to be used. Referring to FIG. 13, step S930 is further explained. Step S930 may include but is not limited to steps S1310 and S1320.

At S1310, the target ECC information is obtained according to the code type indication information.

At S1320, ECC encoding is performed, according to the target ECC information, on the communication data sent to the OLT.

In some possible embodiments, the code type indication information includes at least one of the following:
bits of a burst profile field in a bandwidth allocation map;
partial bits of a start time field in the bandwidth allocation map; or
partial bits of a grant size field in the bandwidth allocation map.

The OLT stores the code type indication information in the bandwidth allocation map, and then sends the bandwidth allocation map to the ONU. After receiving the bandwidth allocation map carrying the code type indication information, the ONU obtains the target ECC information according to the code type indication information, to perform ECC encoding on the communication data by using the target ECC information.

In some possible embodiments, the target ECC information includes a target ECC type and configuration information for information to be deleted, where the configuration information for information to be deleted is used to indicate a deletion mode of content in an ECC.

The performing, by using the target ECC information, ECC encoding on communication data sent to the OLT in step S930 includes:
performing, by using the target ECC information and the configuration information for information to be deleted, ECC encoding on the communication data sent to the OLT.

The OLT stores the target ECC type and the configuration information for information to be deleted in the ECC configuration parameter information, and then sends the ECC configuration parameter information to the ONU. After receiving the ECC configuration parameter information, the ONU performs ECC encoding on the communication data by using the target ECC information and the configuration information for information to be deleted.

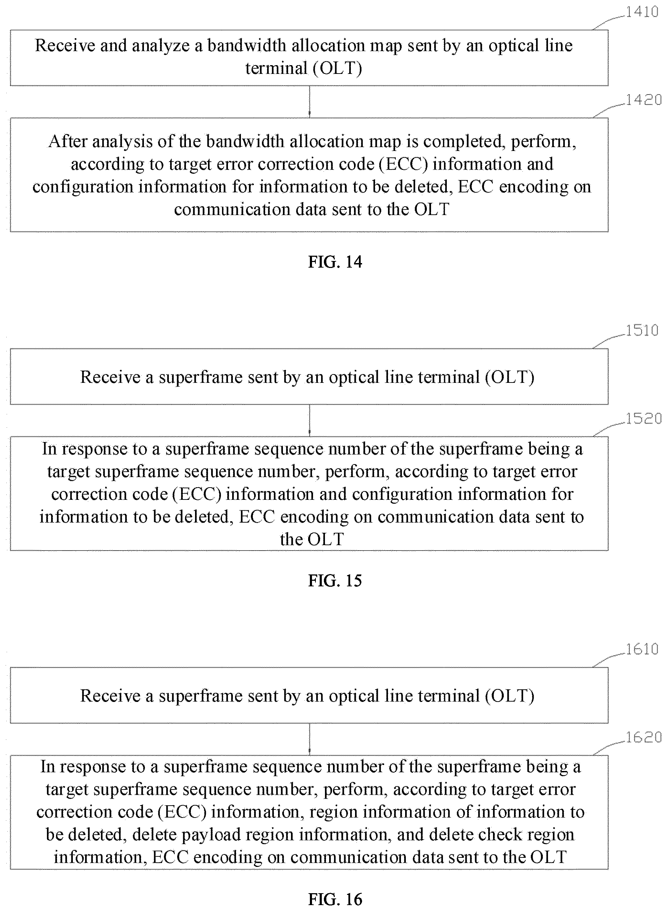

Referring to FIG. 14, in some possible embodiments, the performing, by using the target ECC information and the configuration information for information to be deleted, ECC encoding on the communication data sent to the OLT in the foregoing step includes but is not limited to steps S1410 and S1420:
At S1410, a bandwidth allocation map sent by the OLT is received and analyzed.
At S1420, after analysis of the bandwidth allocation map is completed, ECC encoding is performed, according to the target ECC information and the configuration information for information to be deleted, on the communication data sent to the OLT.

The OLT first sends the ECC configuration parameter information carrying the target ECC type and the configuration information for information to be deleted to the ONU, and the ONU receives and stores the target ECC type and the configuration information for information to be deleted. Then the OLT sends the bandwidth allocation map to the ONU as a trigger, such that after completing analysis of the bandwidth allocation map, the ONU performs, according to the stored target ECC type and the configuration information for information to be deleted, ECC encoding on the communication data sent to the OLT.

In another possible embodiment, the OLT sends the target ECC type and the configuration information for information to be deleted to the ONU through the ECC configuration parameter information, such that after receiving the ECC configuration parameter information, the ONU uses a new ECC in an uplink bandwidth according to the target ECC type and the configuration information for information to be deleted.

In some possible embodiments, the ECC configuration parameter information includes configuration information for information to be deleted and a target superframe sequence number, and the configuration information for information to be deleted is used to indicate a deletion mode of content in an ECC. Referring to FIG. 15, step S1120 is further explained. Step S1120 may include but is not limited to steps S1510 and S1520.

At S1510, a superframe sent by the OLT is received.

At S1520, in response to a superframe sequence number of the superframe being the target superframe sequence number, ECC encoding is performed, according to the target ECC information and the configuration information for information to be deleted, on the communication data sent to the OLT.

It can be understood that, the OLT first sends the target ECC information, the configuration information for information to be deleted, and the target superframe sequence number to the ONU, and the ONU stores these pieces of information upon reception. When the target ECC information and the configuration information for information to be deleted are needed for performing ECC encoding, the OLT sends a superframe with the target superframe sequence number to the ONU, thereby triggering the ONU to use the stored target ECC information and the configuration information for information to be deleted.

In some possible embodiments, the ECC configuration parameter information includes region information of information to be deleted, a target superframe sequence number, delete payload region information, and delete check region information. Referring to FIG. 16, step S1120 is further explained. Step S1120 may include but is not limited to steps S1610 and S1620.

At S1610, a superframe sent by the OLT is received.

At S1620, in response to a superframe sequence number of the superframe being the target superframe sequence number, ECC encoding is performed, according to the target ECC information, the region information of information to be deleted, the delete payload region information, and the delete check region information, on the communication data sent to the OLT.

It can be understood that, the OLT first sends the target ECC information, the region information of information to be deleted, the target superframe sequence number, the delete payload region information, and the delete check region information to the ONU, and the ONU stores these pieces of information upon reception. When the target ECC information, the region information of information to be deleted, the delete payload region information, and the delete check region information are needed for performing ECC encoding, the OLT sends a superframe with the target superframe sequence number to the ONU, thereby triggering the ONU to use the stored information.

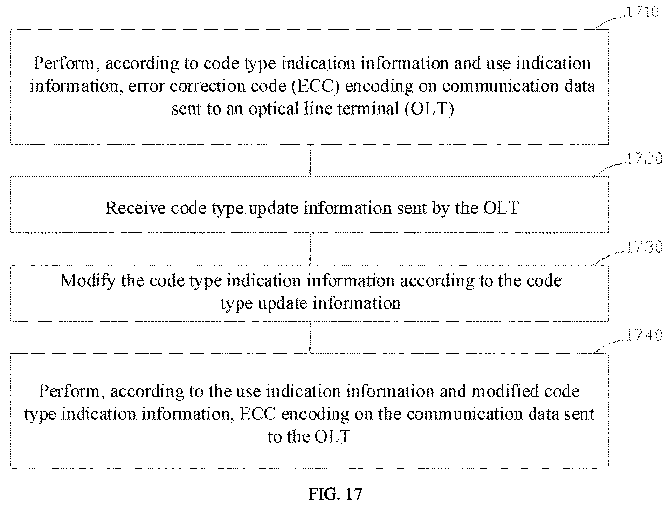

In some possible embodiments, the target ECC information includes code type indication information, and the ECC configuration parameter information includes use indication information. Referring to FIG. 17, step S1120 is further explained. Step S1120 may include but is not limited to step S1710.

At S1710, ECC encoding is performed, according to the code type indication information and the use indication information, on the communication data sent to the OLT.

Referring to FIG. 17, in some possible embodiments, the information configuration method further includes steps S1720, S1730, and S1740.

At S1720, code type update information sent by the OLT is received.

At S 1730, the code type indication information is modified according to the code type update information.

At S 1740, ECC encoding is performed, according to the use indication information and modified code type indication information, on the communication data sent to the OLT.

The OLT sends the code type update information to the ONU, such that the ONU modifies the code type indication information according to the code type update information, and performs, according to the use indication information and modified code type indication information, ECC encoding on the communication data sent to the OLT, thereby realizing modification of the target ECC type.

In addition, a further embodiment of the present disclosure discloses an information configuration apparatus, including a memory, a processor, and a computer program stored in the memory and executable by the processor, where the computer program, when executed by the processor, causes the processor to perform the information configuration method of any embodiment described above.

In addition, a further embodiment of the present disclosure discloses a computer-readable storage medium storing computer-executable instructions for performing the information configuration method described in any of the foregoing embodiments.

Additionally, a further embodiment of the present disclosure discloses a computer program product, including a computer program or computer instructions, where the computer program or the computer instructions are stored in a computer-readable storage medium, a processor of a computer device reads the computer program or the computer instructions from the computer-readable storage medium, and the computer program or the computer instructions, when executed by the processor, cause the computer device to perform the information configuration method as described in any of the previous embodiments.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or another memory technology, a compact disc read-only memory (CD-ROM), a digital versatile disk (DVD) or another optical disk storage, a magnetic cassette, a magnetic tape, magnetic disk storage or another magnetic storage apparatus, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

The above is a detailed description of the preferred implementation of the present disclosure, but the present disclosure is not limited to the above-mentioned embodiments. Those of ordinary skill in the art can also make various equivalent modifications or replacements without departing from the principle of the present disclosure, and these equivalent modifications or replacements are all included in the scope defined by the claims of the present disclosure.

## Claims

1. An information configuration method, applied to an optical line terminal (OLT), the information configuration method comprising:
determining target error correction code (ECC) information according to a candidate ECC type supported by the OLT; and
sending the target ECC information to an optical network unit (ONU), such that by using the target ECC information, the ONU performs ECC encoding on communication data sent to the OLT.

2. The information configuration method of claim 1, wherein during an initial online phase of the ONU, the determining target ECC information according to a candidate ECC type supported by the OLT comprises:
selecting an initial ECC type from candidate ECC types supported by the OLT; and
determining the initial ECC type as the target ECC information.

3. The information configuration method of claim 2, wherein the selecting an initial ECC type from candidate ECC types supported by the OLT comprises:
selecting, from the candidate ECC types supported by the OLT, one with the strongest error correction ability as the initial ECC type, or one suitable for error correction by the OLT as the initial ECC type.

4. The information configuration method of claim 2, wherein the target ECC information comprises a target ECC type; and the information configuration method further comprises:
obtaining operation parameter information of an optical distribution network (ODN);
replacing the target ECC type according to the operation parameter information of the ODN; and
sending a replaced target ECC type to the ONU, such that by using the replaced target ECC type, the ONU performs ECC encoding on communication data sent to the OLT.

5. The information configuration method of claim 1, wherein the target ECC information comprises a target ECC type; and the sending the target ECC information to an ONU, such that by using the target ECC information, the ONU performs ECC encoding on communication data sent to the OLT comprises:
determining ECC configuration parameter information corresponding to the target ECC type; and
sending the target ECC type and the ECC configuration parameter information to the ONU, such that by using the target ECC type and the ECC configuration parameter information, the ONU performs ECC encoding on the communication data sent to the OLT.

6. The information configuration method of claim 1, wherein the determining target ECC information according to a candidate ECC type supported by the OLT comprises:
obtaining error correction encoding information sent by the ONU;
decoding the error correction encoding information to obtain error correction decoding information;
calculating a current bit error rate (BER) according to the error correction encoding information and the error correction decoding information; and
determining the target ECC information according to the current BER and the candidate ECC type supported by the OLT.

7. The information configuration method of claim 1, wherein before the sending the target ECC information to an ONU, the information configuration method further comprises:
sharing the candidate ECC type with the ONU.

8. The information configuration method of claim 7, wherein the sharing the candidate ECC type with the ONU comprises:
sending burst profile control information comprising the candidate ECC type to the ONU, such that the ONU stores the candidate ECC type in the burst profile control information.

9. The information configuration method of claim 7, wherein the sharing the candidate ECC type with the ONU comprises:
storing in common, as agreed upon with the ONU, the candidate ECC type.

10. The information configuration method of claim 7, wherein the target ECC information comprises code type indication information for indicating a target ECC type to be used; and
the sending the target ECC information to an ONU, such that by using the target ECC information, the ONU performs ECC encoding on communication data sent to the OLT comprises:
sending a bandwidth allocation map comprising the code type indication information to the ONU, such that the ONU obtains the target ECC information according to the code type indication information, and performs, according to the target ECC information, ECC encoding on the communication data sent to the OLT.

11. The information configuration method of claim 10, wherein the code type indication information comprises at least one of the following:
bits of a burst profile field in the bandwidth allocation map;
partial bits of a start time field in the bandwidth allocation map; or
partial bits of a grant size field in the bandwidth allocation map.

12. The information configuration method of claim 1, wherein the target ECC information comprises a target ECC type and configuration information for information to be deleted, wherein the configuration information for information to be deleted is used to indicate a deletion mode of content in an ECC; and
the sending the target ECC information to an ONU, such that by using the target ECC information, the ONU performs ECC encoding on communication data sent to the OLT comprises:
sending the target ECC type and the configuration information for information to be deleted to the ONU through ECC configuration parameter information, such that by using the target ECC information and the configuration information for information to be deleted, the ONU performs ECC encoding on the communication data sent to the OLT.

13. The information configuration method of claim 12, wherein the sending the target ECC type and the configuration information for information to be deleted to the ONU through ECC configuration parameter information, such that by using the target ECC information and the configuration information for information to be deleted, the ONU performs ECC encoding on the communication data sent to the OLT comprises:
sending the target ECC type and the configuration information for information to be deleted to the ONU through the ECC configuration parameter information until a count of transmissions reaches a first preset number of times, such that the ONU stores the target ECC type and the configuration information for information to be deleted, and sending a bandwidth allocation map to the ONU, such that after completing analysis of the bandwidth allocation map, the ONU performs, according to the target ECC type and the configuration information for information to be deleted, ECC encoding on the communication data sent to the OLT;
or
sending the target ECC type and the configuration information for information to be deleted to the ONU through the ECC configuration parameter information, such that after receiving the ECC configuration parameter information, the ONU uses a new ECC in an uplink bandwidth according to the target ECC type and the configuration information for information to be deleted.

14. The information configuration method of claim 5, wherein the ECC configuration parameter information comprises configuration information for information to be deleted and a target superframe sequence number, and the configuration information for information to be deleted is used to indicate a deletion mode of content in an ECC; and
the sending the target ECC information and the ECC configuration parameter information to the ONU, such that by using the target ECC information and the ECC configuration parameter information, the ONU performs ECC encoding on the communication data sent to the OLT comprises:
sending the target ECC information, the configuration information for information to be deleted, and the target superframe sequence number to the ONU until a count of transmissions reaches a second preset number of times or response information fed back by the ONU is received, such that the ONU stores the target ECC information, the configuration information for information to be deleted, and the target superframe sequence number; and
sending a superframe to the ONU, such that after receiving a superframe with the target superframe sequence number, the ONU performs, according to the target ECC information and the configuration information for information to be deleted, ECC encoding on the communication data sent to the OLT.

15. The information configuration method of claim 5, wherein the ECC configuration parameter information comprises region information of information to be deleted, a target superframe sequence number, delete payload region information, and delete check region information; and
the sending the target ECC information and the ECC configuration parameter information to the ONU, such that by using the target ECC information and the ECC configuration parameter information, the ONU performs ECC encoding on the communication data sent to the OLT comprises:
sending the target ECC information, the region information of information to be deleted, the target superframe sequence number, the delete payload region information, and the delete check region information to the ONU, such that the ONU stores the target ECC information, the region information of information to be deleted, the target superframe sequence number, the delete payload region information, and the delete check region information; and
sending a superframe to the ONU, such that after receiving a superframe with the target superframe sequence number, the ONU performs, according to the target ECC information, the region information of information to be deleted, the delete payload region information, and the delete check region information, ECC encoding on the communication data sent to the OLT.

16. The information configuration method of claim 5, wherein the target ECC information comprises code type indication information, and the ECC configuration parameter information comprises use indication information; and
the sending the target ECC information and the ECC configuration parameter information to the ONU, such that by using the target ECC information and the ECC configuration parameter information, the ONU performs ECC encoding on the communication data sent to the OLT comprises:
sending burst profile information comprising the code type indication information and the use indication information to the ONU, such that the ONU performs, according to the code type indication information and the use indication information, ECC encoding on the communication data sent to the OLT.

17. The information configuration method of claim 16, wherein after the sending burst profile information comprising the code type indication information and the use indication information to the ONU, such that the ONU performs, according to the code type indication information and the use indication information, ECC encoding on the communication data sent to the OLT, the information configuration method further comprises:
sending code type update information to the ONU, such that the ONU modifies the code type indication information according to the code type update information, and performs, according to the use indication information and modified code type indication information, ECC encoding on the communication data sent to the OLT.

18. An information configuration method, applied to an optical network unit (ONU), the information configuration method comprising:
sending operation parameter information to an optical line terminal (OLT);
receiving target error correction code (ECC) information sent by the OLT, wherein the target ECC information is determined by the OLT according to the operation parameter information and a candidate ECC type supported by the OLT; and
performing, by using the target ECC information, ECC encoding on communication data sent to the OLT.

19. The information configuration method of claim 18, wherein the target ECC information comprises a target ECC type; and the information configuration method further comprises:
sending new operation parameter information to the OLT, such that the OLT replaces the target ECC type according to the new operation parameter information;
receiving replaced target ECC information sent by the OLT; and
performing, by using the replaced target ECC type, ECC encoding on the communication data sent to the OLT.

20. The information configuration method of claim 18, wherein the target ECC information comprises a target ECC type; and the performing, by using the target ECC information, ECC encoding on communication data sent to the OLT comprises:
receiving ECC configuration parameter information sent by the OLT; and
performing, by using the target ECC type and the ECC configuration parameter information, ECC encoding on the communication data sent to the OLT.

21. The information configuration method of claim 18, wherein before the receiving target ECC information sent by the OLT, the information configuration method further comprises:
sharing the candidate ECC type with the OLT.

22. The information configuration method of claim 21, wherein the sharing the candidate ECC type with the OLT comprises:
receiving burst profile control information comprising the candidate ECC type sent by the OLT; and
storing the candidate ECC type in the burst profile control information.

23. The information configuration method of claim 21, wherein the sharing the candidate ECC type with the OLT comprises:
storing in common, as agreed upon with the OLT, the candidate ECC type.

24. The information configuration method of claim 21, wherein the target ECC information comprises code type indication information for indicating a target ECC type to be used; and
the performing, by using the target ECC information, ECC encoding on communication data sent to the OLT comprises:
obtaining the target ECC information according to the code type indication information; and
performing, according to the target ECC information, ECC encoding on the communication data sent to the OLT.

25. The information configuration method of claim 24, wherein the code type indication information comprises at least one of the following:
bits of a burst profile field in a bandwidth allocation map;
partial bits of a start time field in the bandwidth allocation map; or
partial bits of a grant size field in the bandwidth allocation map.

26. The information configuration method of claim 18, wherein the target ECC information comprises a target ECC type and configuration information for information to be deleted, wherein the configuration information for information to be deleted is used to indicate a deletion mode of content in an ECC; and
the performing, by using the target ECC information, ECC encoding on communication data sent to the OLT comprises:
performing, by using the target ECC information and the configuration information for information to be deleted, ECC encoding on the communication data sent to the OLT.

27. The information configuration method of claim 26, wherein the performing, by using the target ECC information and the configuration information for information to be deleted, ECC encoding on the communication data sent to the OLT comprises:
receiving and analyzing a bandwidth allocation map sent by the OLT; and
after analysis of the bandwidth allocation map is completed, performing ECC encoding on the communication data sent to the OLT according to the target ECC information and the configuration information for information to be deleted, or after ECC configuration parameter information is received, using a new ECC in an uplink bandwidth according to the target ECC type and the configuration information for information to be deleted.

28. The information configuration method of claim 20, wherein the ECC configuration parameter information comprises configuration information for information to be deleted and a target superframe sequence number, and the configuration information for information to be deleted is used to indicate a deletion mode of content in an ECC; and
the performing, by using the target ECC information and the ECC configuration parameter information, ECC encoding on the communication data sent to the OLT comprises:
receiving a superframe sent by the OLT; and
in response to a superframe sequence number of the superframe being the target superframe sequence number, performing, according to the target ECC information and the configuration information for information to be deleted, ECC encoding on the communication data sent to the OLT.

29. The information configuration method of claim 20, wherein the ECC configuration parameter information comprises region information of information to be deleted, a target superframe sequence number, delete payload region information, and delete check region information; and
the performing, by using the target ECC information and the ECC configuration parameter information, ECC encoding on the communication data sent to the OLT comprises:
receiving a superframe sent by the OLT; and
in response to a superframe sequence number of the superframe being the target superframe sequence number, performing, according to the target ECC information, the region information of information to be deleted, the delete payload region information, and the delete check region information, ECC encoding on the communication data sent to the OLT.

30. The information configuration method of claim 20, wherein the target ECC information comprises code type indication information, and the ECC configuration parameter information comprises use indication information; and
the performing, by using the target ECC information and the ECC configuration parameter information, ECC encoding on the communication data sent to the OLT comprises:
performing, according to the code type indication information and the use indication information, ECC encoding on the communication data sent to the OLT.

31. The information configuration method of claim 30, wherein after the performing, according to the code type indication information and the use indication information, ECC encoding on the communication data sent to the OLT, the information configuration method further comprises:
receiving code type update information sent by the OLT;
modifying the code type indication information according to the code type update information; and
performing, according to the use indication information and modified code type indication information, ECC encoding on the communication data sent to the OLT.

32. An information configuration apparatus, comprising: a memory, a processor, and a computer program stored in the memory and executable by the processor, wherein the computer program, when executed by the processor, causes the processor to implement the information configuration method of any one of claims 1 to 31.

33. A computer-readable storage medium, storing computer-executable instructions configured to cause a computer to perform the information configuration method of any one of claims 1 to 31.

34. A computer program product, comprising a computer program or computer instructions stored in a computer-readable storage medium, from which a processor of a computer device reads the computer program or the computer instructions, wherein the computer program or the computer instructions, when executed by the processor, cause the computer device to perform the information configuration method of any one of claims 1 to 31.
